# EUROPÄISCHE PATENTSCHRIFT

(11) **EP 3 892 173 B1**
(45) Veröffentlichungstag und Bekanntmachung des Hinweises auf die Patenterteilung: **28.08.2024**
(21) Anmeldenummer: 20168988.2
(22) Anmeldetag: 09.04.2020
(51) Int. Cl.: A47J 43/046, A47J 43/07

(54) **BACKAUFSATZ FÜR EINE KÜCHENMASCHINE**
BAKING ATTACHMENT FOR A KITCHEN APPLIANCE
ADAPTATEUR DE CUISSON POUR UN ROBOT DE CUISINE

(43) Veröffentlichungstag der Anmeldung: 13.10.2021
(73) Patentinhaber: CookingPal Limited, Kwun Tong, Kowloon (HK)
(72) Erfinder: BUCK, Markus, Hong Kong (HK)
(74) Vertreter: Raffay & Fleck

(56) Entgegenhaltungen:
- WO-A1-2021/029603
- US-A1- 2016 174 771
- US-A1- 2017 071 413
- US-A1- 2019 174 945

## Beschreibung

Die vorliegende Erfindung betrifft einen Backaufsatz für eine Küchenmaschine. Es sind Küchenmaschinen bekannt, die für die Zubereitung von gekochten Speisen verwendet werden, hierbei die gekochten Speisen in weitgehend automatischen Abläufen und insbesondere auch nach vorgegebenen Rezepten zubereiten können. Derartige Küchenmaschinen umfassen eine Küchenmaschinenbasis und einen mit der Küchenmaschinenbasis lösbar verbindbaren Kochtopfaufsatz. Bei modernen Geräten ist der Kochtopfaufsatz mit einem Heizelement versehen, das über zwischen dem Kochtopfaufsatz und der Küchenmaschinenbasis hergestellte Steckkontakte mit einem Heizstrom versorgt werden kann. Den Heizstrom steuert eine Steuerung der Küchenmaschine, die in der Küchenmaschinenbasis angeordnet ist. Weiterhin ist ein Rührwerk vorgesehen, welches in dem Kochtopfaufsatz angeordnet ist und von einem in der Küchenmaschinenbasis angeordneten Motor zum Rühren und/oder Zerkleinern von zu garenden Lebensmitteln rotierend angetrieben werden kann. Hierzu ist eine Kupplungsverbindung zwischen einer Drehwelle des Rührwerks, die typischerweise einem Topfboden des Kochtopfaufsatzes durchtritt, und einer in einem Aufnahmeabschnitt der Küchenmaschinenbasis mündenden Antriebswelle vorgesehen. Eine solche Küchenmaschine ist zum Beispiel in der DE 100 19 126 A1 gezeigt und in einer besonderen Ausgestaltung beschrieben. Derartige Küchenmaschinen sind derzeit von unterschiedlichen Anbietern am Markt erhältlich und erfreuen sich bei den Endverbrauchern zunehmender Beliebtheit. Sie erleichtern in vielen Haushalten die Zubereitung von Mahlzeiten, lassen sich sogar programmieren, sodass neben der Zubereitung der Mahlzeit andere Tätigkeiten im Haushalt oder zur Erledigung sonstiger Arbeiten ausgeführt werden können.

Auch sind beispielsweise aus der US 2019/174945 A1 Küchenmaschinen mit einem Küchengefäß bekannt, das zwecks Isolierung doppelwandig ausgestaltet ist, wobei der Zwischenraum zwischen beiden Wänden ein Vakuum aufweist. Des Weiteren sind Küchenmaschinen bekannt, die speziell für automatisiert durchgeführte Backvorgänge, insbesondere für das Backen von Brot, und für die Anwendung in Verbraucherhaushalten, gestaltet sind, sogenannte Brotbackautomaten. Ein Beispiel für einen solchen Brotbackautomaten ist in der DE 698 20 458 T2 gezeigt und beschrieben. Bei solchen Maschinen handelt es sich um einzelstehende Geräte, die in einem gemeinsamen Gehäuse eine Steuerung und eine Heizversorgung sowie einen Antriebsmotor für ein Misch- und Knetwerk sowie einen lösbar in einer Aufnahme in dem Gehäuse einzusetzenden Backtopfeinsatz umfassen. In der Aufnahme ist eine Heizeinrichtung angeordnet zum Erhitzen eines durch die Aufnahme gebildeten Backraumes und damit eines in dem Backtopfeinsatz enthaltenen Backgutes. Mit solchen Brotbackautomaten können in weitgehend automatisierten Abläufen Backwaren, wie insbesondere Brote, aber auch Kuchen oder dergleichen, zubereitet werden. Die meisten Geräte erlauben eine Programmierung, sodass beispielsweise am Abend des Vortages der Backtopfeinsatz mit den für die Zubereitung bspw. eines Brotes erforderlichen Zutaten befüllt werden und über Nacht ein Backprogramm ablaufen kann, sodass am Morgen des folgenden Tages ein frisch gebackenes Brot zur Verfügung steht. Auch diese Brotbackautomaten erfreuen sich großer Beliebtheit und sind in vielen Haushalten anzutreffen.

Ein Problem in vielen Haushalten besteht allerdings darin, dass der zur Verfügung stehende Platz, typischerweise in den Küchen, in denen die Küchenmaschinen und Brotbackautomaten und weitere derartige Geräte aufgestellt sind, begrenzt ist. Entsprechend schaffen sich viele Haushalte nicht diejenigen Geräte und Maschinen an, die sie gern verwenden würden, schlicht weil der vorhandene Raum und Platz nicht für die Aufstellung all dieser Geräte, wie zum Beispiel einer Küchenmaschine und eines Brotbackautomaten, ausreichend ist. Und auch dann, wenn Haushalte mehrere derartige Geräte zur Verfügung haben, können diese oftmals nicht gleichzeitig aufgestellt werden, was nicht selten dazu führt, dass einzelne der Geräte verstaut werden, wegen ebenfalls in der Küche nur begrenzt vorhandenen Stauraums häufig in Abstellräumen, zum Beispiel im Keller oder auf dem Dachboden. Die Erfahrung zeigt, dass einmal dort in Abstellbereichen aussortierte Geräte in der Regel nur noch selten, bisweilen sogar überhaupt nicht mehr zum Einsatz kommen, sodass auch diejenigen Haushalte, die eine Vielzahl von Geräten zur Vereinfachung der Arbeit in der Küche besitzen, diese oftmals nicht zum Einsatz bringen.

Schließlich ist auch die Anschaffung einer Vielzahl von Küchengeräten, wie Küchenmaschinen und Brotbackautomaten, kostspielig, zumal bei jedem der Geräte die komplette Technik mit gekauft wird, d. h. Steuerung, Antrieb, Gehäusemotor, Einsätze etc., was die einzelnen Maschinen in der Anschaffung teuer macht. Hier soll mit der Erfindung angesetzt und Abhilfe geschaffen werden, indem eine Möglichkeit angegeben wird, ein einziges Küchengerät, insbesondere eine Küchenmaschine, vielfältiger zu nutzen, dies mit Zubehörteilen, die weit weniger Stauraum einnehmen. Zudem soll mit der Erfindung eine Möglichkeit geschaffen werden, kostengünstig eine Mehrzahl von Funktionen an automatisierter Unterstützung in der Küche zur Verfügung zu stellen.

Diese Aufgabe wird zunächst gelöst durch einen Backaufsatz für eine Küchenmaschine mit den Merkmalen des Anspruchs 1. Vorteilhafte Weiterbildungen eines solchen Backaufsatzes sind in den abhängigen Ansprüchen 2 bis 11 angegeben.

Ein weiterer Aspekt einer Lösung der vorstehend bezeichneten Aufgabe besteht in einer Küchenmaschine mit den Merkmalen des Anspruchs 12. Vorteilhafte Weiterbildungen einer solchen Küchenmaschine sind in den Ansprüchen 13 bis 15 aufgezeigt.

Erfindungsgemäß wird ein Backaufsatz für eine Küchenmaschine angegeben, der zunächst ein Außengefäß aufweist. Das Außengefäß beinhaltet einen Aufnahmeraum, der mit Innenwänden eingefasst ist, und weist oberseitig eine Einsetzöffnung auf. Das Außengefäß kann insbesondere auch einen Bodenabschnitt aufweisen, der insbesondere eine Durchbrechung aufzeigen kann. Der Backaufsatz hat ferner ein Zubereitungsgefäß. Dieses Zubereitungsgefäß weist einen Boden und Seitenwände auf und hat eine obere Öffnung. In dem Zubereitungsgefäß ist ein Zubereitungsraum gebildet, der durch die obere Öffnung zugänglich ist. Das Zubereitungsgefäß ist in dem Aufnahmeraum in einer solchen Weise angeordnet, dass zwischen dem Boden und den Seitenwänden des Zubereitungsgefä-βes und den den Aufnahmeraum einfassenden Innenwänden des Außengefäßes, einschließlich eines etwaigen Bodens des Außengefäßes, ein Zwischenraum gebildet ist. In dem Zwischenraum ist eine Heizeinrichtung angeordnet. Weiterhin weist der Backaufsatz ein Misch- und Knetwerk auf, dass eine durch den Boden des Zubereitungsgefäßes und durch einen Bodenabschnitt des Außengefäßes hindurchgeführte Drehwelle und ein mit der Drehwelle verbundenes, in dem Zubereitungsraum angeordnetes Misch- und Knetwerkzeug aufweist. Schließlich weist der Backaufsatz einen Deckel zum Verschließen der Einsetzöffnung auf.

Bei dem erfindungsgemäßen Backaufsatz weist das Außengefäß im Bereich des Bodenabschnitts einen Verbindungsabschnitt zum lösbaren Einsetzen in einen Aufnahmeabschnitt einer Küchenmaschinenbasis auf. In diesem Verbindungsabschnitt ist ein freies Ende der Drehwelle angeordnet, das einen ersten Kupplungsabschnitt aufweist zum drehfesten Verbinden mit einem an einer Antriebswelle einer Küchenmaschinenbasis angeordneten zweiten Kupplungsabschnitt. Weiterhin sind in dem Verbindungsabschnitt elektrisch mit der Heizeinrichtung verbundene elektrische Kontaktelemente zum lösbaren Verbinden mit elektrischen Kontakten einer Küchenmaschinenbasis angeordnet.

Mit der Erfindung wird erstmals ein nicht in einer Küchenmaschine fest integrierter Backaufsatz angegeben, der mit einer Küchenmaschinenbasis lösbar als Aufsatz verbunden werden kann und dann zusammen mit der Küchenmaschinenbasis eine automatisch betreibbare Küchenmaschine zum Backen, auch Brotbackenautomat genannt, bildet. Insbesondere - und dies liegt im besonderen Fokus der Erfindung - kann ein solcher Backaufsatz also für eine Küchenmaschinenbasis angepasst hergestellt und bereitgestellt werden, die zugleich auch mit anderen Aufsätzen, insbesondere einem Kochaufsatz, verbunden werden kann. Es kann sich hierbei insbesondere auch um eine bereits bestehende Küchenmaschinenbasis handeln, die mit einem anderen Aufsatz, z.B. einem Kochaufsatz, eine Küchenmaschine mit anderer Funktion bildet.

Entsprechend ist die Küchenmaschinenbasis funktional mit unterschiedlichen Aufsätzen verwendbar, können mit einer solchen Küchenmaschinenbasis und unterschiedlichen funktionalen Aufsätzen verschiedene Arten von Küchenmaschinen, zum Beispiel Kochautomaten einerseits und Backautomaten andererseits, gebildet werden. Die Küchenmaschinenbasis mit den darin integrierten Elementen, insbesondere einem Antriebsmotor, einer Steuerung, Eingabe- und Ausgabemodulen und dergleichen, ist lediglich einmal vorhanden, was einerseits Investitionskosten spart, andererseits eine raumsparende Möglichkeit für die Verwirklichung von mehreren Funktionen von Küchenmaschinen ermöglicht, indem nicht neben einer bekannten Küchenmaschine, zum Beispiel mit einer Kochfunktion, eine weitere vollständige Küchenmaschine in Form eines Backautomaten, auch als Brotbackautomaten bezeichnet, angeschafft werden muss.

Die Verbindung mit der Küchenmaschinenbasis erfolgt durch Aufsetzen des Backaufsatzes auf die Küchenmaschinenbasis und dabei Einsetzen des Verbindungsabschnitts in einen Aufnahmeabschnitt der Küchenmaschinenbasis, wobei hierbei zugleich durch lösbares Verbinden der elektrischen Kontaktelemente mit den elektrischen Kontakten in der Küchenmaschinenbasis elektrische Kontakte zum Betreiben insbesondere der Heizeinrichtung hergestellt werden und zudem eine Drehmomentübertragung auf das Misch- und Knetwerk geschaffen wird durch die Kupplung zwischen der Drehwelle und der Antriebswelle durch Verbinden von erstem und zweitem Kupplungsabschnitt. Im Gebrauch kann vorgesehen sein, dass die Küchenmaschinenbasis anpassbar gestaltet ist für das Durchführen unterschiedlicher Programmabläufe abhängig davon, ob der erfindungsgemäße Backaufsatz mit der Küchenmaschinenbasis verbunden ist oder ein anderer Aufsatz, wie zum Beispiel ein Kochaufsatz.

Erfindungsgemäß, ist das Zubereitungsgefäß lösbar in den Aufnahmeraum einsetzbar gestaltet. Dies ist nicht nur für eine Reinigung des Zubereitungsgefäßes nach Gebrauch von besonderem Vorteil, sondern auch für ein Auslösen eines fertiggestellten Backwerks, zum Beispiel eines Brotlaibes, aus dem Zubereitungsgefäß. Hierfür kann das Zubereitungsgefäß aus dem Aufnahmeraum entnommen und zum Beispiel gestürzt werden.

Aus ähnlichen Gründen kann mit Vorteil vorgesehen sein, dass das Misch- und Knetwerkzeug lösbar mit der Drehwelle verbindbar ist. Auch dies ist im Grunde von bestehenden Backautomaten an sich schon bekannt. Auch hier erleichtert diese Maßnahme eine Reinigung des Misch- und Knetwerkzeugs und vereinfacht im Übrigen auch ein Entnehmen des fertigen Backproduktes, bei dem häufig das Misch- und Knetwerkzeug zunächst im Backwerk verbleibt und dann gesondert gelöst und entnommen wird.

Weiterhin kann der erfindungsgemäße Backaufsatz mit Vorteil so gestaltet sein, dass das in den Aufnahmeraum eingesetzte Zubereitungsgefäß mit einer oberen Öffnung unterhalb der Einsetzöffnung liegt, sodass der Deckel die obere Öffnung des Zubereitungsgefäß ist nicht verschließt, wenn er in einer die Einsetzöffnung verschließenden Verschlussstellung angeordnet ist. Durch diese konstruktive Maßnahme kann insbesondere durch das Heizelement erhitzte Luft das Backgut durch die obere Öffnung direkt erreichen und zur Ausbildung einer Kruste bei gebackenem Brot beitragen. Im Übrigen kann beim Backvorgang gebildeter Wasserdampf aus dem Zubereitungsgefäß entweichen.

Der erfindungsgemäße Backaufsatz kann weiterhin mit Vorteil Verbindungstrukturen am Außengefäß aufweisen sowie Gegenstrukturen am Deckel, wobei der Deckel durch Zusammenwirken der Verbindungstrukturen und Gegenstrukturen an dem Außengefäß verriegelt festlegbar ist. Insbesondere kann der Deckel von dem Außengefäß vollständig abnehmbar gestaltet sein. Durch die Verbindungstrukturen und Gegenstrukturen kann der Backaufsatz fest verschlossen werden, sodass der Deckel an dem Außengefäß hält, der Inhalt des Zubereitungsgefäßes und auch das Außengefäß an sich geschützt ist während des Betriebes, insbesondere auch gegen ein Eingreifen einer Bedienperson, die so auch davor geschützt ist, zum Beispiel mit dem heißen Zubereitungsgefäß in Kontakt zu gelangen. Die Möglichkeit, den Deckel vollständig abzunehmen, erleichtert eine Reinigung und Handhabung des Zubereitungsgefäßes. Sie ist zudem von Vorteil, wenn der Backaufsatz angepasst ist an die Gestaltung weiterer Aufsätze zum Verbinden mit der Küchenmaschinenbasis, zum Beispiel eines Kochaufsatzes, der üblicherweise ebenfalls einen vollständig abnehmbaren Deckel aufweist.

Gemäß einer weiteren vorteilhaften Weiterbildung kann der Backaufsatz an dem Deckel einen Positionsgeberabschnitt aufweisen zum Zusammenwirken mit einem Positionsfühler an der Küchenmaschinenbasis für eine Überwachung einer vollständig verriegelten und den Aufnahmeraum verschließenden Position des Deckels. Durch einen solchen Positionsgeberabschnitt und den Positionsfühler wird sichergestellt, dass die Küchenmaschinenbasis eine vollständig verschlossene und verriegelte Position des Deckels feststellen und überwachen kann. Dies ist von Kochaufsätzen und von dem Betrieb von Küchenmaschinen mit derartigen Kochaufsätzen bereits bekannt und führt insbesondere dazu, dass die Küchenmaschine im Hinblick auf grundsätzlich gefährdende Betriebsarten, wie den Betrieb eines Rührwerks oder einer Heizung, erst in Betrieb genommen werden kann, wenn der Deckel sicher verriegelt ist. In gleicher Weise lässt sich dies nun auch beim Gebrauch eines solchermaßen gestalteten Backaufsatz umsetzen.

Weiterhin kann mit Vorteil vorgesehen sein, dass der erfindungsgemäße Backaufsatz einen Temperatursensor zum Ermitteln einer Temperatur des Zubereitungsgefäßes, der Luft in dem Zwischenraum und/oder eines in dem Zubereitungsraum befindlichen Backgutes aufweist. Dann ist eine Signalleitung des Temperatursensors mit einem in dem Verbindungsabschnitt gelegenen Signalkontaktelement verbunden. Dieses Signalkontaktelement kann dann wiederum mit einem Signalkontakt an der Küchenmaschinenbasis lösbar gekoppelt und verbunden werden, wenn der Backaufsatz mit seinem Verbindungsabschnitt lösbar in den Aufnahmeabschnitt einer passenden Küchenmaschinenbasis eingesetzt ist. Auf diese Weise ist es möglich, eine Rückmeldung über die Arbeitstemperatur in dem Backaufsatz zu erhalten und diese an eine Steuerung der Küchenmaschinenbasis zu übermitteln.

Weiterhin kann bei dem erfindungsgemäßen Backaufsatz mit Vorteil vorgesehen sein, dass an diesem ein Identifikationsträger angeordnet ist. Dieser Identifikationsträger ist zum Übermitteln einer Identifikationsinformation an eine Küchenmaschinenbasis eingerichtet. Es kann sich hierbei zum Beispiel um einen RFID-Chip handeln. Ein solcher Identifikationsträger kann beispielsweise eine Identifikationsinformation enthalten, die die Küchenmaschinenbasis mittels eines entsprechenden Lesegeräts erkennen lässt, dass es sich bei dem Aufsatz um einen Backaufsatz handelt. Entsprechend kann in der Küchenmaschinenbasis eine Grundeinstellung der Steuerung erfolgen, die für den Betrieb des Backaufsatzes und der durch die Kombination aus Küchenmaschinenbasis und Backaufsatz erhaltenen Küchenmaschine in Form eines Backautomaten geeignet oder erforderlich ist. Zum Beispiel können unterschiedliche Drehzahlen der Antriebswelle vorgegeben werden für entweder den Betrieb der Küchenmaschine mit einem Backaufsatz oder mit einem Kochaufsatz, es können auch andere Heizleistungen vorgesehen sein. Weiterhin können die Heizelemente von Kochaufsätzen, Backaufsätzen oder dergleichen Aufsätzen unterschiedliche elektrische Eigenschaften aufweisen, insbesondere elektrische Widerstände, sodass zum Beispiel Heizströme unterschiedlich bemessen werden oder Heizrampen unterschiedlich gefahren werden, je nachdem welcher Aufsatz gerade auf der Küchenmaschinenbasis aufgesetzt ist.

Bei dem erfindungsgemäßen Backaufsatz kann mit Vorteil vorgesehen sein, dass das Außengefäß doppelwandig gebildet ist mit einer unter Belassung eines Zwischenraums die Innenwände umgebenden Außenwand. Durch eine solche Ausgestaltung kann insbesondere eine thermische Isolation erreicht werden, sodass auch im Betrieb das Außengefäß mit seiner Außenwand weiterhin vergleichsweise kühl bleibt, insbesondere unterhalb einer für Personen im Hinblick auf mögliche Verletzungen durch Verbrennungen gefährlichen Temperatur.

Bei dem erfindungsgemäßen Backaufsatz kann weiterhin mit Vorteil vorgesehen sein, dass der Deckel eine, insbesondere zentrale, Öffnung und eine Abdeckung zum wahlweisen Verschließen der Öffnung aufweist. Diese Öffnung kann zum Beispiel für ein weiteres Einfüllen von Backzutaten vorgesehen sein, sodass nicht der gesamte Deckel abzunehmen ist, sondern lediglich die Abdeckung der Öffnung. Die Abdeckung kann beispielsweise und insbesondere transparent gestaltet sein, sodass ein Nutzer durch diese transparente Abdeckung Einblick in das Zubereitungsgefäß durch dessen obere Öffnung nehmen kann. Die Abdeckung kann insbesondere mit entsprechenden Mitteln lösbar an dem Deckel festlegbar sein, zum Beispiel durch Magnete oder dergleichen. Es kann hier auch eine Überwachung vorgesehen sein, die zum Beispiel das Misch- und Knetwerk ausschaltet, wenn die Abdeckung geöffnet ist.

Weiterhin kann bei dem erfindungsgemäßen Backaufsatz mit Vorteil vorgesehen sein, dass in dem Deckel eine Dampfaustrittsöffnung gebildet ist. Eine solche Dampfaustrittsöffnung kann ermöglichen, dass beim Backprozess entstehender Wasserdampf aus dem Zubereitungsgefäß und dem Außengefäß austritt und somit verhindern, dass das Backwerk durchfeuchtet und hierdurch möglicherweise nicht gelingt. Der Öffnungsdurchmesser der Dampfaustrittsöffnung wird in einer Weise bemessen, dass ausreichend Öffnungsquerschnitt zum Austreten von Dampf vorhanden ist, dass andererseits ein Eingriff durch diese Öffnung nicht erfolgen kann. Mit Vorteil kann die Dampfaustrittsöffnung anzentrisch angeordnet sein, insbesondere in einem Bereich der in einer lotrechten Projektion außerhalb des Anordnungsbereichs des Zubereitungsgefäßes liegt.

Ein weiterer Lösungsaspekt, den die Erfindung im Hinblick auf die oben bezeichnete Aufgabe gibt, besteht in einer Küchenmaschine mit einer Küchenmaschinenbasis, die eine Antriebswelle und einen Motor zum rotierenden Antreiben der Antriebswelle aufweist. Die Küchenmaschinenbasis weist ferner eine Steuerung auf zum Ansteuern des Motors und zum Ausgeben eines Heizstroms. Weiterhin weist die Küchenmaschinenbasis einen Aufnahmeabschnitt auf, in dem die Antriebswelle mit einem zweiten Kupplungsabschnitt mündet und in dem elektrische Kontakte zum Beaufschlagen mit dem Heizstrom angeordnet sind. Die Küchenmaschine weist erfindungsgemäß einen Backaufsatz auf, wie er vorstehend beschrieben ist. Dieser Backaufsatz ist mit seinem Verbindungsabschnitt derart in den Aufnahmeabschnitt der Küchenmaschinenbasis einsetzbar und dabei lösbar mit der Küchenmaschinenbasis verbindbar, dass die elektrischen Kontaktelemente des Backaufsatzes mit den elektrischen Kontakten der Küchenmaschinenbasis elektrisch kontaktieren und dass die Drehwelle mit dem ersten Kupplungsabschnitt über den zweiten Kupplungsabschnitt mit der Antriebswelle der Küchenmaschinenbasis drehfest verbunden ist zum Antreiben des Misch- und Knetwerks.

In einer solchen erfindungsgemäßen Küchenmaschine ist also eine Kombination aus Küchenmaschinenbasis einerseits und Backaufsatz gemäß der vorstehend beschriebenen Art andererseits gegeben, bei der durch entsprechende Ausgestaltung von Verbindungsabschnitt und Aufnahmeabschnitt und der korrespondierenden Anordnung der beiden Kupplungselemente einerseits sowie der elektrischen Kontaktelement und elektrischen Kontakte andererseits durch Aufsetzen des Backaufsatzes auf die Küchenmaschinenbasis mit in dem Aufnahmeabschnitt passend angeordnetem Verbindungsabschnitt eine Küchenmaschine in Form eines Backautomaten gebildet ist. Die Küchenmaschinenbasis der erfindungsgemä-βen Küchenmaschine kann mit Vorteil einen Positionfühler aufweisen, der eine Stellung des Positionsgeberabschnitts, der an dem Deckel des Backaufsatzes vorgesehen ist, in einer das Außengefäß fest verschließenden und verriegelten Position des Deckels erfasst und infolge dieser Erfassung ein Signal an die Steuerung ausgibt. Dieses an die Steuerung ausgegebene Signal kann dann insbesondere dazu führen, dass ein Arbeitsablauf und Betrieb der Küchenmaschine, insbesondere eine Inbetriebnahme der Heizung und/oder des Misch- und Knetwerks freigegeben ist, dass andersherum gesagt ein solcher Betrieb ohne eine entsprechende Rückmeldung des Positionsfühlers nicht möglich ist, durch die Steuerung unterbunden ist.

Weiterhin kann die erfindungsgemäße Küchenmaschine mit Vorteil so ausgestaltet sein, dass sie, wenn der Backaufsatz einen Identifikationsträger aufweist eine Leseeinrichtung zum Auslesen des Identifikationsträgers aufweist, insbesondere einen RFID-Leser, wobei die Lesereinrichtung mit der Steuerung verbunden ist zum Übermitteln von Daten an die Steuerung. Auf diese Weise kann die Küchenmaschinenbasis erkennen, dass der Backaufsatz aufgesetzt und mit der Küchenmaschinenbasis zur Bildung der Küchenmaschine verbunden ist und kann ihren Betrieb automatisiert auf die entsprechenden Abläufe und Vorgaben einrichten, die für den Betrieb als Backautomat erforderlich sind.

Erfindungsgemäß kann schließlich vorgesehen sein, dass die Küchenmaschine weiterhin einen Kochaufsatz aufweist mit einem einen Garraum umschließenden, eine obere Öffnung aufweisenden Kochgefäß, einer in dem Kochgefäß angeordneten Heizeinrichtung und einem an dem Kochgefäß insbesondere lösbar angeordneten und in den Garraum hineinragenden Rührwerk, dass eine Drehwelle und an der Drehwelle festgelegte Rührmittel, insbesondere Rührklingen, umfasst. Der Kochaufsatz weist weiterhin einen Deckel zum Verschließen der oberen Öffnung des Kochgefäßes auf. Das Kochgefäß weist dabei einen Verbindungsabschnitt und in dem Verbindungsabschnitt ein freies Ende der Drehwelle mit ersten Kupplungsmitteln auf sowie mit der Heizeinrichtung elektrisch verbundene elektrische Kontaktelemente. Der Kochaufsatz ist mit einem Verbindungsabschnitt in den Aufnahmeabschnitt der Küchenmaschinenbasis derart einsetzbar und damit lösbar mit der Küchenmaschinenbasis verbindbar, dass die elektrischen Kontaktelemente des Kochaufsatzes mit den elektrischen Kontakten der Küchenmaschinenbasis elektrisch kontaktieren und dass die Drehwelle des Rührwerks mit dem ersten Kupplungsabschnitt über den zweiten Kupplungsabschnitt mit der Antriebswelle drehfest verbunden ist zum Antreiben des Rührwerks.

Erfindungsgemäß kann also in die Küchenmaschine neben einer einzigen Küchenmaschinenbasis jedenfalls zwei Aufsätze, nämlich einen Backaufsatz der vorstehend beschriebenen Art und einen wie zuvor erläuterten Kochaufsatz aufweisen, die wahlweise mit der Küchenmaschinenbasis verbunden bzw. auf diese aufgesetzt werden können, zum Bilden unterschiedlicher Arten einer Küchenmaschine, nämlich eines Backautomaten bzw. eines Kochautomaten. Eine solche Kombination kann auch als Küchenmaschinensystem bezeichnet werden. Die Verbindungsabschnitt von Backaufsatz und Kochaufsatz sind dabei gleichartig geformt und gebildet, sodass sie jeweils in dem Aufnahmeabschnitt der Küchenmaschinenbasis aufgenommen werden können und sodass dabei einerseits eine Verbindung der Antriebswelle der Küchenmaschinenbasis mit der jeweiligen Drehwelle zum rotierenden Antreiben von Misch- und Knetwerk bzw. Rührwerk gebildet werden kann, andererseits die elektrischen Kontaktelemente mit den elektrischen Kontakten eine mechanische und elektrische Verbindung eingehen, sodass gesteuert durch die Steuerung in der Küchenmaschinenbasis ein Heizstrom an den jeweiligen Aufsatz übertragen werden kann. Auch der Kochaufsatz kann dabei einen Temperatursensor zum Erfassen einer Temperatur des Kochgefäßes, des zu garenden Inhalts oder dergleichen aufweisen und kann eine Signalleitung des Temperatursensors mit einem in dem Verbindungsabschnitt gelegenen Signalkontaktelement verbunden sein. Dieses Signalkontaktelement ist dann wiederum so in dem Verbindungabschnitt angeordnet, dass es mit einem Signalkontakt in dem Aufnahmeabschnitt kontaktiert, wenn der Kochaufsatz mit seinem Verbindungsabschnitt in dem Aufnahmeabschnitt passend angeordnet und so mit der Küchenmaschinenbasis verbunden ist. Auch der Kochaufsatz kann mit einem Identifikationsträger, zum Beispiel einem RFID-Chip, versehen sein, der mit einem entsprechenden Lesegerät an der Küchenmaschinenbasis ausgelesen werden kann. Auf diese Weise kann bei aufgesetztem Kochaufsatz die Küchenmaschinenbasis, genauer deren Steuerung, an den Betrieb des Kochaufsatzes angepasst und kann eine entsprechende Grundeinstellung in der Steuerung vorgenommen werden, dies vollständig automatisch. Ein Erkennen des aufgesetzten Aufsatzes kann dabei zum Beispiel auch eine Ausgabe an den Benutzer beeinflussen, indem ihm zum Beispiel auf einer Anzeigeeinrichtung der Küchenmaschinenbasis, wenn der Kochaufsatz aufgesetzt ist, mit dem Kochaufsatz und mittels der durch Anordnung desselben auf der Küchenmaschinenbasis gebildeten Küchenmaschine (Kochautomaten) abzuarbeitende Kochrezepte anzeigt, bei aufgesetztem Backaufsatz zum Beispiel entsprechende Backrezepte.

Die Aufsätze Backaufsatz und Kochaufsatz können insbesondere ihrer Höhe, können aber auch in Bezug auf andere Abmessungen, so aufeinander abgestimmt bzw. gleich gebildet sein, dass sie mit der Küchenmaschinenbasis verbunden werden könne, z.B. auch insoweit, als dass die jeweiligen Decken verriegelt und einer Verriegelung von der Küchenmaschinenbasis festgestellt werden kann.

Die Küchenmaschinenbasis kann schließlich weitere, für Back- und/oder Kochaufsätze nutzbare Funktionen und zugehörige Einrichtungen aufweisen, wie z.B. eine Wägeeinrichtung zum Abwiegen von in dem mit der Basis verbundenen Backaufsatz und/oder dem Kochaufsatz eingebrachten Zutaten.

Insbesondere die wie vorstehend beschriebene Ausgestaltung einer Küchenmaschine, die eben mehrere Aufsätze, insbesondere einen Backaufsatz wie vorstehend beschrieben und einen Kochaufsatz, aufweist, erbringt einen besonderen Vorteil dahingehend, dass mit einer einzigen Küchenmaschinenbasis und eben unterschiedlichen Aufsätzen Küchenmaschinen verschiedener Funktionalität erhalten werden können. Dabei ist es gerade nicht erforderlich, für jede der Küchenmaschinen eine vollständige Infrastruktur zu schaffen mit in einem Gehäuse angeordneten Steuerung, Motor und dergleichen. Vielmehr werden die Küchenmaschinen einfach durch wahlweises Auswählen der passenden Aufsätze generiert. Dies spart Kosten auf der einen Seite und reduziert auf der anderen Seite den Platzbedarf für die Anordnung und Unterbringung der Gerätschaften.

Weitere Vorteile und Merkmale der Erfindung ergeben sich aus der nachfolgenden Beschreibung möglicher Ausgestaltungsformen anhand der beigefügten Figuren. Dabei zeigen:
- Figur 1: einen erfindungsgemäßen Backaufsatz nach einer möglichen Ausführungsform in einer Explosionsdarstellung;
- Figur 2: eine Längsschnittdarstellung des Backaufsatzes nach Figur 1;
- Figur 3: in einer Ansicht von unten auf den Backaufsatz aus Figur 1 den auf der Unterseite des Backaufsatzes ausgebildeten Verbindungsabschnitt;
- Figur 4: eine mögliche Ausführungsform einer erfindungsgemäßen Küchenmaschine, die die Form eines Backautomaten aufweist und die durch eine Küchenmaschinenbasis und einen auf dieser aufgesetzten Backaufsatz gemäß Figur 1 gebildet ist;
- Figur 5: eine Aufsicht auf die Küchenmaschinenbasis der Küchenmaschine aus Figur 4, in der insbesondere auch ein Aufnahmebereich der Küchenmaschinenbasis erkennbar ist;
- Figur 6: eine Querschnittsansicht der Küchenmaschinenbasis der Küchenmaschine aus Figur 4;
- Figur 7: eine Querschnittsansicht der Küchenmaschine aus Figur 4, also durch die Küchenmaschinenbasis mit dem aufgesetzten Backaufsatz;
- Figur 8: eine Küchenmaschine, bzw. ein Küchenmaschinensystem, mit Küchenmaschinenbasis gemäß Figur 4, Backaufsatz gemäß Figur 1 und einem Kochaufsatz als weiterem Bestandteil; und
- Figur 9: eine aus einem Küchenmaschinensystem nach Figur 8 durch Aufsetzen des Kochaufsatzes auf die Küchenmaschinenbasis gebildete Küchenmaschine in Form eine Kochautomaten.

In den Figuren sind mögliche Ausführungsbeispiele und -varianten skizzenartig dargestellt. Die Figuren stellen dabei keine Konstruktionszeichnungen dar, sondern sind vielmehr als technische Skizzen zu verstehen, die der Veranschaulichung der wesentlichen Merkmale und Besonderheiten der erfindungsgemäßen Ausführungsformen dienen.

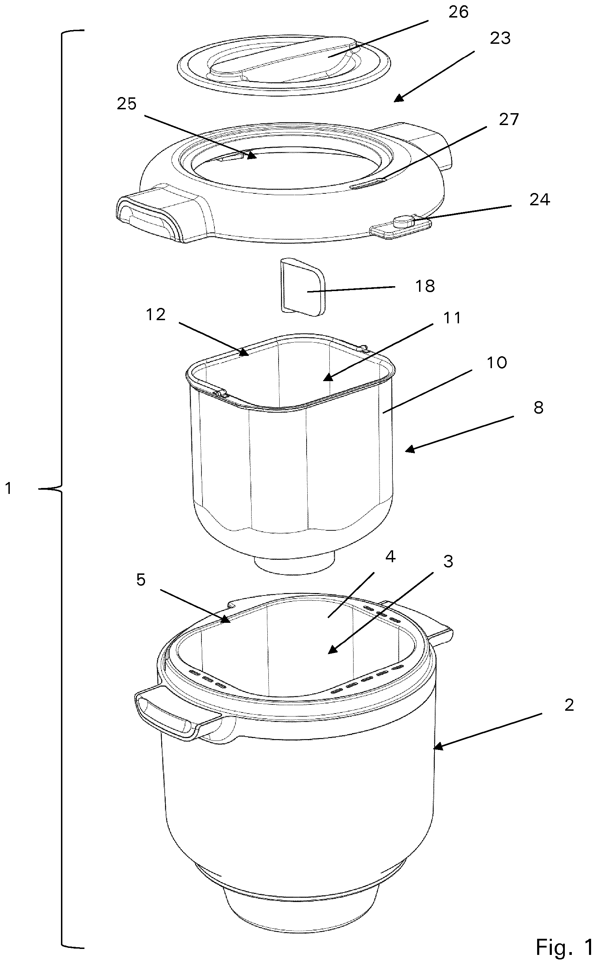

In den Figuren 1 bis 3 ist dabei zunächst eine mögliche Ausgestaltungsform eines erfindungsgemäßen Backaufsatzes gezeigt und allgemein mit der Bezugsziffer 1 bezeichnet. Der Backaufsatz 1 weist zunächst ein Außengefäß 2 auf, in dem ein Aufnahmeraum 3 gebildet ist. Dieser Aufnahmeraum 3 ist durch eine Innenwand 4 begrenzt und weist eine im Gebrauchszustand oben gelegene Einsetzöffnung 5 auf, durch die der Aufnahmeraum 3 zugänglich ist. Die Innenwand 4 des Außengefäßes 2 ist von einer Außenwand 6 umgeben, wobei zwischen der Außenwand 6 und der Innenwand 4 ein Zwischenraum 7 belassen ist, der mit Luft oder einem anderen thermisch isolierenden Material befüllt ist. Diese Anordnung dient dazu, die Außenwand 6 des Außengefäßes 2 von der Innenwand 4 thermisch zu entkoppeln.

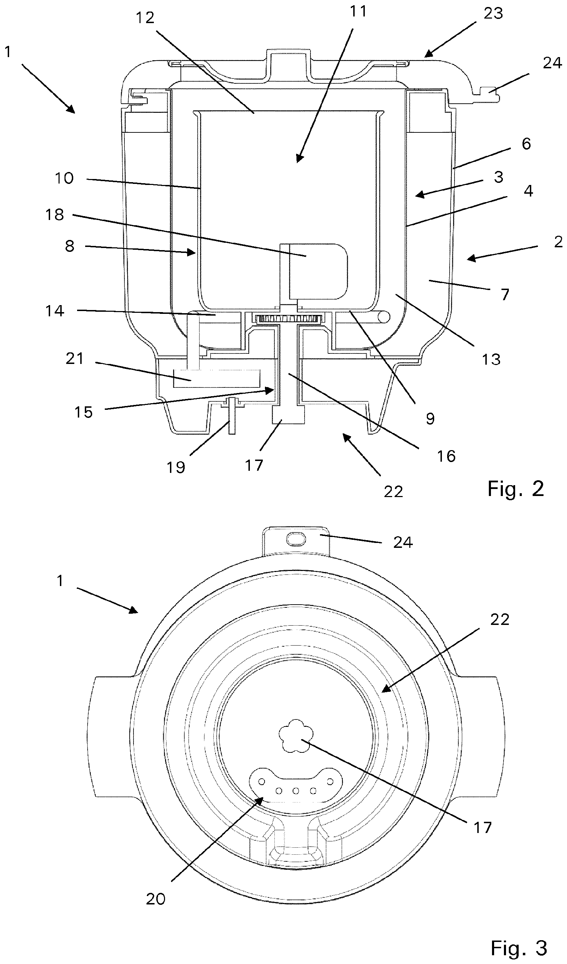

Ein Zubereitungsgefäß 8 ist in den Aufnahmeraum 3 eingesetzt und lösbar mit dem Außengefäß 2 verbunden, und zwar in einem im Gebrauchszustand unten liegenden Bereich. Das Zubereitungsgefäß 8 weist einen Boden 9 sowie eine umlaufende Seitenwand 10 auf, die einen Zubereitungsraum 11 begrenzen. Über eine obere Öffnung 12 ist der Zubereitungsraum 11 zugänglich. Zwischen der Innenwand 4 des Außengefäßes 2 und der Seitenwand 10 sowie dem Boden 9 des Zubereitungsgefäßes 8 ist ein weiterer Zwischenraum 13 belassen. In diesem Zwischenraum 13 ist, in diesem Ausführungsbeispiel ausschließlich bodenseitig des Zubereitungsgefäßes 8, ein Heizelement 14 angeordnet, in diesem Ausführungsbeispiel ein Widerstandsheizelement. Mit diesem Heizelement kann durch Beschicken mit einem Heizstrom Wärme erzeugt werden, die es ermöglicht, in dem Zubereitungsgefäß 8 befindliches Backwerk, ausgehend von einem Teig, zu backen und so zuzubereiten. Der Backaufsatz 1 weist weiterhin ein Misch- und Knetwerk 15 auf. Dieses hat eine in einer festen Durchführung durch das Außengefäß 2 hindurchgeführte Drehwelle 16, die an einem freien Ende ein Kupplungselement 17 aufweist, das mit der Drehwelle 16 drehfest verbunden ist. Mit einem dem Kupplungselement 17 gegenüberliegenden Ende der Drehwelle 16 und durch eine Öffnung in dem Boden 9 des Zubereitungsgefäßes 8 hindurch ist ein Misch- und Knetwerkzeug 18 mit der Drehwelle 16 lösbar verbindbar. Dieses Misch- und Knetwerkzeug 18 ist im Innern des Zubereitungsraumes 11 des Zubereitungsgefäßes 10 angeordnet. In dem in Figur 2 gezeigten, zusammengesetzten Zustand, in dem das Zubereitungsgefäß 8 in den Aufnahmeraum 3 des Außengefäßes 2 eingesetzt ist, ist das Niveau der oberen Öffnung 12 des Zubereitungsgefäßes 8 deutlich unterhalb des Niveaus der Einsetzöffnung 5 des Außengefäßes 2 angeordnet. Erkennbar ist in Figur 2 auch ein stiftartig gebildetes Kontaktelement 19, welches (hier nicht näher dargestellt) eine elektrische Verbindung mit dem Heizelement 14 aufweist. Wie in Figur 3 zu erkennen sind mehrere Kontaktstifte in einem Kontaktblock 20 angeordnet, wobei Teile der Kontaktstifte über elektrische Leitungen mit dem Heizelement 14 verbunden sind, andere Teile Sensorkontaktelemente bilden, die mit einem (hier nicht näher dargestellten) Temperatursensor zum Erfassen der Betriebstemperatur des Backaufsatzes 1 verbunden sind. Ebenfalls - und hier nur schematisch - dargestellt ist ein Identifikationsträger 21, der in einem im Gebrauchszustand unten befindlichen Abschnitt des Backaufsatzes 1 angeordnet ist. Hierbei kann es sich insbesondere um einen RFID-Chip handeln, der eine den Backaufsatz 1 als einen solchen, nämlich einen Backaufsatz, ausweisenden Identifikationscode trägt.

Auf der der Aufnahmeöffnung 5 gegenüberliegenden Seite, im Gebrauchszustand einer Unterseite, ist an dem Außengefäß 2 des Backaufsatzes 1 ein Verbindungsabschnitt 22 ausgebildet, in dem insbesondere der Kontaktblock 20 mit Kontaktelementen 19 und Sensorkontaktelementen (hier nicht näher beziffert) ausgebildet ist und in dem auch das Kupplungselement 17 der Drehwelle 16 frei zugänglich liegt. Dieser Verbindungsabschnitt 22 dient in einer später noch näher zu beschreibenden Weise einem Aufsetzen auf und einer Verbindung mit einer Küchenmaschinenbasis.

Weiterhin Bestandteil des Backaufsatzes 1 ist ein Deckel 23, der - vollständig abnehmbar - mit dem Außengefäß 2 verbindbar und an diesem verriegelbar gestaltet ist. An dem Deckel 23 ist an einem Fortsatz ein Positionsgeber 24 angeformt, der in einer später noch zu beschreibenden Weise dem Zusammenwirken mit einem Positionsfühler an einer Küchenmaschinenbasis dient und damit einem Erkennen eines verschlossenen und verriegelten Zustandes des Deckels 23. Der Deckel 23 lässt, wie Figur 2 erkennen lässt, einen Abstand zu der oberen Öffnung 12 des Zubereitungsgefäßes 8.

Der Deckel 23 weist eine zentrale Öffnung 25 auf, die mit einer Abdeckung 26 verschließbar ist. Die Abdeckung 26 kann in die Öffnung 25, diese vollständig überdeckend, eingesetzt werden und wird dort durch entsprechende Mittel gehalten, zum Beispiel durch Magnete. Auf diese Weise kann auch bei aufgesetztem Deckel 23 durch Abnehmen der Abdeckung 26 der Zubereitungsraum 11, genauer die obere Öffnung 12 zugänglich gemacht werden, sodass Zutaten in den Zubereitungsraum 11 eingebracht werden können. Weiterhin weist der Deckel 23 eine schlitzförmig gebildete, azentrisch angeordnete Dampfauslassöffnung 27 auf, die unverschlossen bleibt. Durch diese Dampfauslassöffnung 27 kann während eines Backvorganges gebildeter Wasserdampf aus dem Backaufsatz 1 austreten, sodass einen Überfeuchten des Backwerks verhindert werden kann.

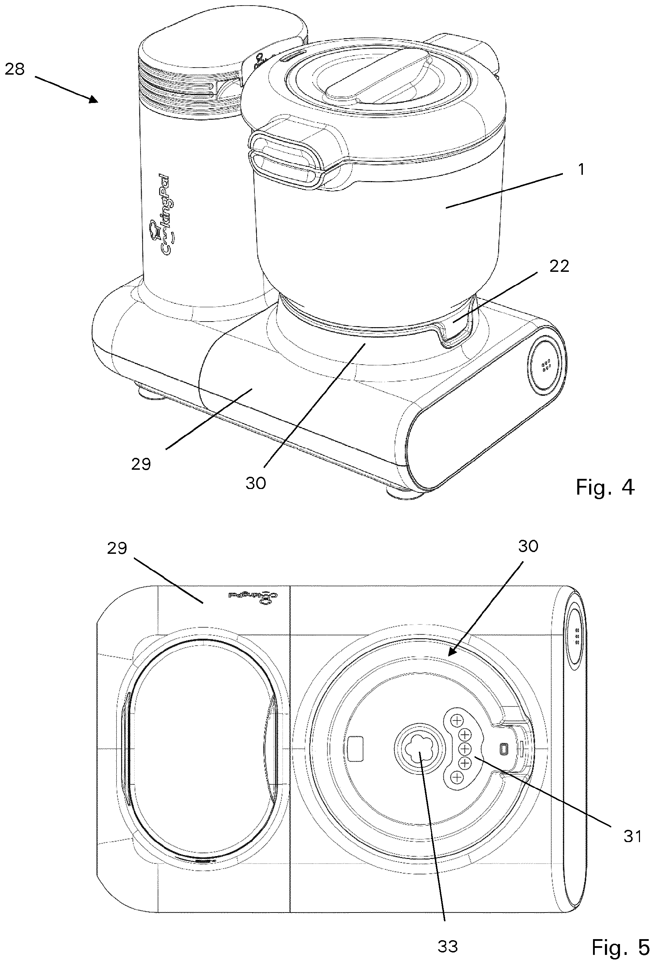

In Figur 4 ist dann eine Küchenmaschine 28 erfindungsgemäßer Art gezeigt. Diese ist gebildet durch eine Küchenmaschinenbasis 29 und einen auf dieser aufgesetzten und mit dieser verbundenen Backaufsatz 1 gemäß den Figuren Ziffer 1 bis 3. Dabei ist der Backaufsatz 1 mit seinem Verbindungsabschnitt 22 in einen Aufnahmeabschnitt 30 der Küchenmaschinenbasis 29 eingesetzt und dort festgelegt.

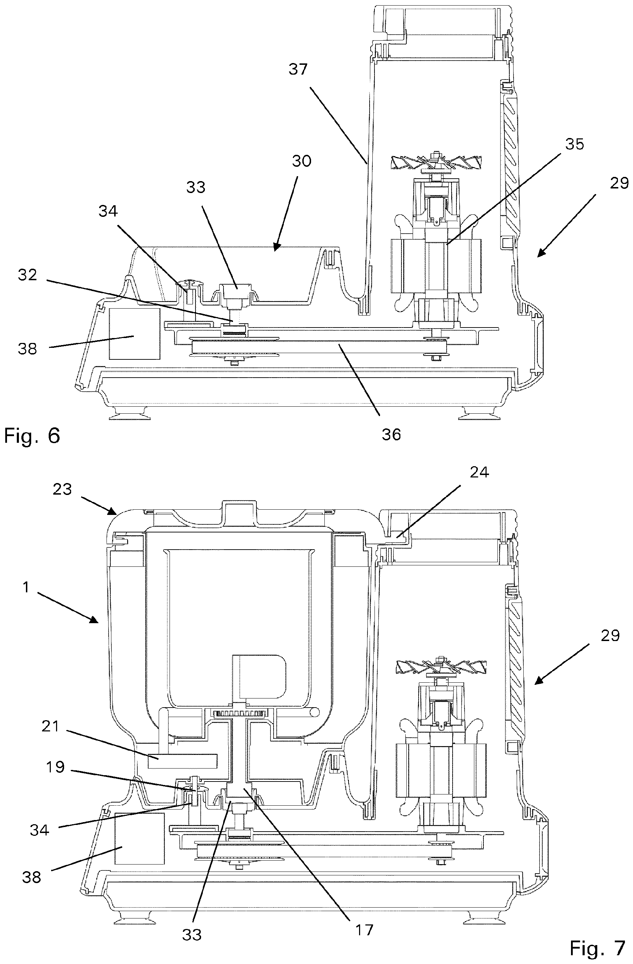

Die Küchenmaschinenbasis 29 ist zunächst in den Figuren 5 und 6 noch einmal näher gezeigt. Zu erkennen ist insbesondere in Figur 5 der Aufnahmeabschnitt 30, in dem ein Anschlussblock 31 gebildet ist, in dem elektrische Kontakte 34 (vergleiche Figur 6) angeordnet sind und elektrische Sensorkontakte (nicht näher bezeichnet). Weiterhin zu erkennen ist, dass in dem Aufnahmeabschnitt 30 eine Antriebswelle 32 mit einem Kupplungselement 33 mündet, das Kupplungselement 33 dort exponiert liegt. In dem gezeigten Ausführungsbeispiel treibt ein in der Küchenmaschinenbasis 29 angeordneter Motor 35 über einen Antriebsriemen 36 die Antriebswelle 32 rotierend an. Ein Gehäuse 37 umschließt die genannten Elemente bzw. den für diese vorgesehenen Bauraum der Küchenmaschinenbasis 29. Innerhalb des Gehäuses 37 ist in der Küchenmaschinenbasis 29 auch eine Steuerung 38 angeordnet, die ein Lesegerät enthält zum Auslesen des Identifikationsträgers 21. Die Steuerung 38 gibt Steuersignale und bestimmt die Drehzahl und Schaltstellung des Motors 35 auf der einen Seite und eine Zuführung von Heizstrom zu den elektrischen Kontakten 34 auf der anderen Seite.

In Figur 7 ist gut zu erkennen, wie der Backaufsatz 1 mit seinem Verbindungsabschnitt 22 auf dem Aufnahmeabschnitt 30 der Küchenmaschinenbasis 29 auf und in diesen eingesetzt ist. Zu erkennen ist hier auch, dass Verbindungsabschnitt 22 und Aufnahmeabschnitt 30 mit korrespondierenden Formgebungen ausgestaltet sind, sodass diese passgerecht ineinanderpassen. Zu erkennen ist weiterhin, dass das Kupplungselement 17 der Drehwelle 16 mit dem Kupplungselement 33 der Antriebswelle 32 koppelt und dass das elektrische Kontaktelement 19 in den als Kontaktbuchse ausgebildeten elektrischen Kontakt 34 eingesteckt, und so ein elektrischer Kontakt hergestellt ist. Weiterhin zu erkennen ist, dass der Positionsgeber 24 in einen Abschnitt des Gehäuses 37 eingefahren ist, wo er einen nicht näher gezeigten Positionsfühler betätigt, sodass eine sicher verschlossene und verriegelte Stellung des Deckels 23 angezeigt ist. Der Positionsfühler ist seinerseits mit der Steuerung 38 verbunden und gibt ein Freigabesignal zum Betrieb von Motor 35 und Heizelement 14.

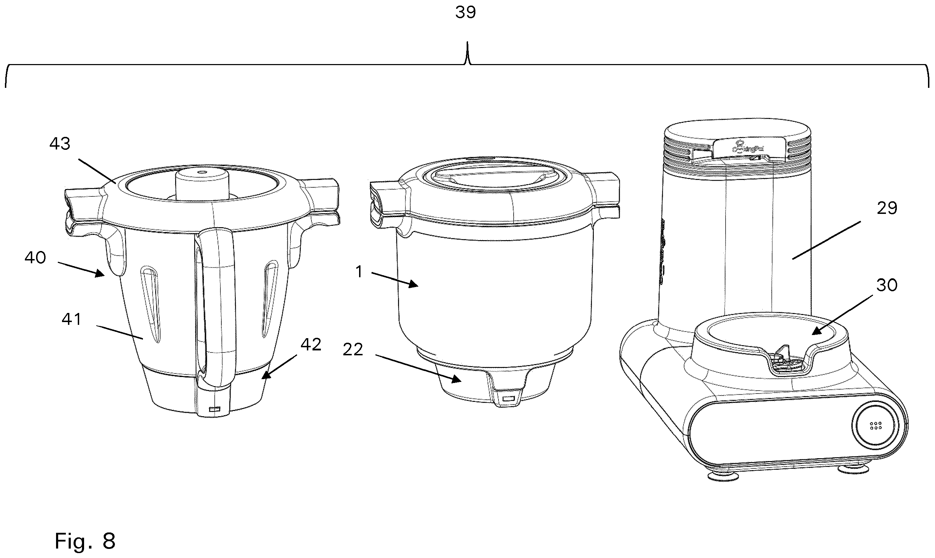

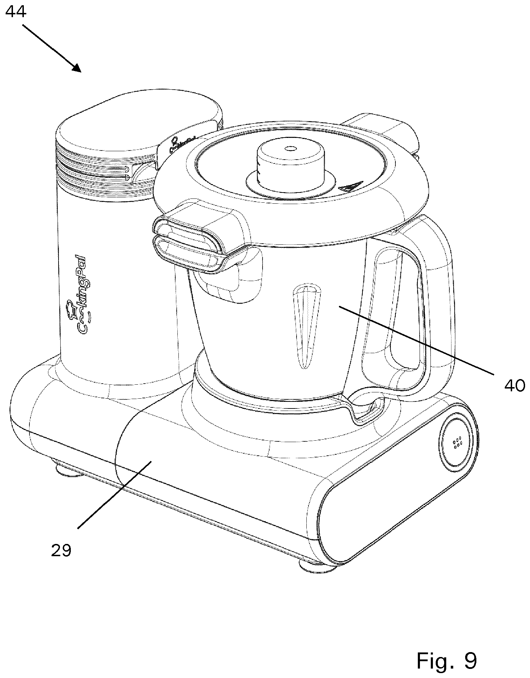

In Figur 8 ist ein Küchenmaschinenset 39 gezeigt, dass neben dem Backaufsatz 1 und der Küchenmaschinenbasis 29 noch einen Kochaufsatz 40 umfasst. Der Kochaufsatz 40 hat einen Topf 41, der mit einem Deckel 43 verschlossen werden kann und an dem in Gebrauchsstellung unterseitig ein Verbindungsabschnitt 42 angeformt ist, der zu dem Verbindungsabschnitt 22 des Backaufsatzes 1 korrespondiert und entsprechend ebenfalls in den Aufnahmeabschnitt 30 der Küchenmaschinenbasis 29 eingesetzt werden kann. In dem Kochaufsatz 40, der den an sich bekannten Kochaufsätzen von als Kochautomaten, bzw. Kochrobotern ausgebildeten Küchenmaschinen gleicht, ist, in an sich bekannter Weise, ein Heizelement angeordnet zum Erhitzen des Topfes 41, bzw. eines darin aufgenommenen Gargutes. Weiterhin ist in dem Topf 41 ein Rührwerk angeordnet zum Zerkleinern und/oder Durchmischen eines in dem Topf 41 befindlichen Garguts. Das Rührwerk tritt - hier nicht näher gezeigt - in dem Verbindungabschnitt 42 ebenfalls mit einem Kupplungselement aus, welches an einer zu dem Rührwerk gehörigen Drehwelle festgelegt ist und welches dem Kupplungselement 17 an dem Backaufsatz 1 gleicht, entsprechend mit dem Kupplungselement 33 an der Küchenmaschinenbasis 29 gekoppelt werden kann. Auch sind an dem Kochaufsatz 40 in dem Verbindungsabschnitt 42 Kontaktelemente vorgesehen, die in ihrer Position und Ausgestaltung den Kontaktelementen gleichen, wie sie in dem Kontaktblock 20 des Backaufsatz 1 angeordnet sind, sodass auch diese mit den elektrischen Kontakten in dem Anschlussblock 31 der Küchenmaschinenbasis 29 in Kontakt gebracht werden können. Auf diese Weise kann aus dem Küchenmaschinenset 39 eine Küchenmaschine 28, wie sie in Figur 4 gezeigt ist gebildet werden, mit der ein automatisch durchgeführtes Backen erfolgen kann. Es kann aber ebenso gut eine Küchenmaschine 44 gebildet werden, wie sie in Figur 9 gezeigt ist, also eine an sich bekannte Küchenmaschine nach Art eines Kochroboters. Dabei sind die Aufsätze Backaufsatz 1 und Kochaufsatz 40 so dimensioniert, insbesondere die Deckel 23 und 43 so gestaltet, dass beide Aufsätze mit der Küchenmaschinenbasis 29 zusammenwirken können. Auch der Deckel 43 des Kochaufsatzes hat dabei einen (hier nicht näher dargestellten) Fortsatz mit einem Positionsgeber, der dem Positionsgeber 24 an dem Deckel 23 des Backaufsatzes 1 gleicht und in gleicher Weise mit der Küchenmaschinenbasis 29 und dem darin angeordneten Positionsfühler zusammenwirkt um bei der Küchenmaschine 44 einen sicher verriegelten Verschluss des Deckels 43 anzuzeigen und der Steuerung 38 ein entsprechendes Signal zu geben. Beide Küchenmaschinen 28 und 44 werden dabei mit ein und derselben Küchenmaschinenbasis 29, die in dem Küchenmaschinenset 39 nur einmal vorhanden ist, gebildet.

In dem Kochaufsatz 40 kann in dem Verbindungsabschnitt 42 ebenfalls ein Identifikationsträger angeordnet sein, beispielsweise ein RFID-Chip, der den Kochaufsatz 40 als solchen ausweist und für das Lesegerät an der Steuerung 38 der Küchenmaschinenbasis 29 erkennbar macht. Auf diese Weise kann die Steuerung 39 der Küchenmaschinenbasis 29 je nach aufgesetztem Aufsatz, Backaufsatz 1 oder Kochaufsatz 40, eine Grundeinstellung für den Betrieb der Küchenmaschine, insbesondere für die Vorgabe von Drehzahlwerten des Motors 35 und/oder für die Vorgabe von Heizströmen zum Betrieb des Heizelements 14 bzw. einer Heizeinrichtung in dem Kochaufsatz 40, vornehmen.

In dem vorliegenden Ausführungsbeispiel ist die Küchenmaschinenbasis 29 als vergleichsweise einfach aufgebautes Gerät gezeigt. Die Küchenmaschinenbasis 29 kann aber zum Beispiel auch komplexer aufgebaut sein mit weiteren Funktionen, zum Beispiel mit einer integrierten Wägeeinrichtung zum Wiegen eines in den angeschlossenen Aufsatz eingefüllten Inhaltes oder auch mit einer Anzeigeeinrichtung zum Anzeigen von optischen Ausgaben an einen Bediener, zum Beispiel ein Berührbildschirm. Auf dieser Anzeige können z.B. in der Steuerung oder in einem angeschlossenen Datenträger oder auch über eine mittels einer in der Küchenmaschinenbasis 29 integrierten Schnittstelle hergestellten Internetverbindung heruntergeladene Rezepte zur Anzeige gebracht werden oder Zustands- und/oder Fehlermeldungen. Auch können Eingaben eines Benutzers erfolgen.

Eine durch Kombination der Küchenmaschinenbasis 29 mit den Backaufsatz 1 gebildete Küchenmaschine 28 in Form eines Backautomaten wird in üblicher Weise betrieben, wie dies für Backautomaten herkömmlicher Art üblich ist. Das heißt, es werden Rezepte abgearbeitet, bei denen ein Nutzer Zutaten, wie zum Beispiel Mehl, Wasser, Hefe, Salz, Zucker, Körner in den Zubereitungsraum 11 einfüllt, anschließend den Deckel 23 aufsetzt und verriegelt und dann das Misch- und Knetwerk 15 in Betrieb genommen wird und mit dem Misch- und Knetwerkzeug 18, dass hier paddelartig gebildet ist, diese Mischung durchrührt und geknetet wird, bis ein gleichförmiger Teig erhalten ist. Anschließend kann dieser Teig zum Beispiel bei niedriger Wärmezufuhr durch das Heizelement 14 gehen gelassen werden, dann z.B. erneut geknetet, anschließend ruhen und erneut gehen gelassen werden, bis dann durch Erhöhen der Heizleistung des Heizelements 14 und damit der Temperatur der eigentliche Backvorgang beginnt. Insbesondere kann durch die Steuerung 38 eine Timerfunktion vorgegeben werden, sodass der Backvorgang zeitlich so begonnen wird, dass zu einer Zielzeit ein zuzubereitendes Backwerk fertiggestellt ist, beispielsweise ein Brot morgens zum Frühstück, um solch ein frisches Brot anbieten und verzehren zu können.

Aus der vorstehenden Beschreibung von Ausführungsbeispielen und -varianten ist noch einmal deutlich geworden, welchen besonderem Vorteil die erfindungsgemäße Gestaltung eines Backaufsatzes und einer aus Zusammenstellung einer Küchenmaschinenbasis und eines solchen Backaufsatzes gebildeten Küchenmaschine mit sich bringt. Wenngleich in der vorstehenden Beschreibung von Ausführungsbeispielen und -varianten verschiedene weitere, teils besonders vorteilhafte Merkmale dargelegt sind, sollen diese Besonderheiten die Erfindung in ihrem allgemeinen Umfang nicht beschränken. Die Erfindung ist in den nachfolgenden Ansprüchen in ihrer allgemeinen Tragweite bestimmt.

### Bezugszeichenliste

- 1: Backaufsatz
- 2: Außengefäß
- 3: Aufnahmeraum
- 4: Innenwand
- 5: Einsetzöffnung
- 6: Außenwand
- 7: Zwischenraum
- 8: Zubereitungsgefäß
- 9: Boden
- 10: Seitenwand
- 11: Zubereitungsraum
- 12: obere Öffnung
- 13: Zwischenraum
- 14: Heizelement
- 15: Misch- und Knetwerk
- 16: Drehwelle
- 17: Kupplungselement
- 18: Misch- und Knetwerkzeug
- 19: Kontaktelement
- 20: Kontaktblock
- 21: Identifikationsträger
- 22: Verbindungsabschnitt
- 23: Deckel
- 24: Positionsgeber
- 25: Öffnung
- 26: Abdeckung
- 27: Dampfauslassöffnung
- 28: Küchenmaschine
- 29: Küchenmaschinenbasis
- 30: Aufnahmeabschnitt
- 31: Anschlussblock
- 32: Antriebswelle
- 33: Kupplungselement
- 34: elektrischer Kontakt
- 35: Motor
- 36: Antriebsriemen
- 37: Gehäuse
- 38: Steuerung mit Lesegerät
- 39: Küchenmaschinenset
- 40: Kochaufsatz
- 41: Topf
- 42: Verbindungsabschnitt
- 43: Deckel
- 44: Küchenmaschine

## Patentansprüche

1. Backaufsatz (1) für eine Küchenmaschine (28) mit
• einem einen Aufnahmeraum (3) mit Innenwänden (4) einfassenden, oberseitig eine Einsetzöffnung (5) aufweisenden Außengefäß (2),
• einem einen Boden (9) und Seitenwände (10) aufweisenden, eine obere Öffnung (12) aufweisenden, einen Zubereitungsraum (11) aufweisenden Zubereitungsgefäß (8), das in dem Aufnahmeraum (3) so angeordnet ist, dass zwischen dem Boden (9) und den Seitenwänden (10) des Zubereitungsgefäßes (8) und den den Aufnahmeraum (3) einfassenden Innenwänden (4) des Außengefäßes (2) ein Zwischenraum (13) gebildet ist,
• einer in dem Zwischenraum (13) angeordneten Heizeinrichtung (14),
• einem eine durch den Boden (9) des Zubereitungsgefäßes (8) und durch einen Bodenabschnitt des Außengefäßes (2) hindurchgeführte Drehwelle (16) sowie ein mit der Drehwelle (16) verbundenes, in dem Zubereitungsraum (11) angeordnetes Misch- und Knetwerkzeug (18) aufweisenden Misch- und Knetwerk (15) und
• einem Deckel (23) zum Verschließen der Einsetzöffnung (5),
wobei das Außengefäß (2) im Bereich des Bodenabschnitts einen Verbindungsabschnitt (22) zum lösbaren Einsetzen in einen Aufnahmeabschnitt (30) einer Küchenmaschinenbasis (29) aufweist, wobei in dem Verbindungabschnitt (22) ein freies Ende der Drehwelle (16) angeordnet ist, das einen ersten Kupplungsabschnitt (17) aufweist zum drehfesten Verbinden mit einem an einer Antriebswelle (32) einer Küchenmaschinenbasis (29) angeordneten zweiten Kupplungsabschnitt (33), und wobei in dem Verbindungsabschnitt (22) weiterhin elektrisch mit der Heizeinrichtung (14) verbundene elektrische Kontaktelemente (19) zum lösbaren Verbinden mit elektrischen Kontakten (34) einer Küchenmaschinenbasis (19) angeordnet sind, **dadurch gekennzeichnet, dass** das Zubereitungsgefäß (11) lösbar in den Aufnahmeraum (3) einsetzbar gestaltet ist.

2. Backaufsatz (1) nach einem der vorhergehenden Ansprüche, **dadurch gekennzeichnet, dass** das Misch- und Knetwerkzeug (18) lösbar mit der Drehwelle (16) verbindbar ist.

3. Backaufsatz (1) nach einem der vorhergehenden Ansprüche, **dadurch gekennzeichnet, dass** das in den Aufnahmeraum (3) eingesetzte Zubereitungsgefäß (8) mit seiner oberen Öffnung (12) unterhalb der Einsetzöffnung (5) liegt, so dass der Deckel (23) die obere Öffnung (12) des Zubereitungsgefä-βes (8) nicht verschließt, wenn er in einer die Einsetzöffnung (5) verschließenden Verschlussstellung angeordnet ist.

4. Backaufsatz (1) nach einem der vorhergehenden Ansprüche, **gekennzeichnet durch** Verbindungsstrukturen am Außengefäß (2) und Gegenstrukturen am Deckel (23), wobei der Deckel (23) durch Zusammenwirken der Verbindungsstrukturen und Gegenstrukturen an dem Außengefäß (2) verriegelnd festlegbar ist.

5. Backaufsatz (1) nach einem der vorhergehenden Ansprüche, **dadurch gekennzeichnet, dass** der Deckel (23) von dem Außengefäß (2) vollständig abnehmbar gestaltet ist.

6. Backaufsatz (1) nach einem der vorhergehenden Ansprüche, **gekennzeichnet durch** einen an dem Deckel (23) vorgesehenen Positionsgeberabschnitt (24) zum Zusammenwirken mit einem Positionsfühler an der Küchenmaschinenbasis (29) für eine Überwachung einer vollständig verriegelten und den Aufnahmeraum (3) verschließenden Position des Deckels (23).

7. Backaufsatz (1) nach einem der vorhergehenden Ansprüche, **gekennzeichnet durch** einen Temperatursensor zum Ermitteln einer Temperatur des Zubereitungsgefäßes (8), der Luft in dem Zwischenraum (13) und/oder eines in dem Zubereitungsraum (11) befindlichen Backgutes, wobei eine Signalleitung des Temperatursensors mit einem in dem Verbindungsabschnitt (22) gelegenen Signalkontaktelement verbunden ist.

8. Backaufsatz (1) nach einem der vorhergehenden Ansprüche, **gekennzeichnet durch** einen an dem Backaufsatz (1) angeordneten, zum Übermitteln einer Identifikationsinformation an eine Küchenmaschinenbasis (29) eingerichteten Identifikationsträger (21), insbesondere einen RFID-Chip.

9. Backaufsatz (1) nach einem der vorhergehenden Ansprüche, **dadurch gekennzeichnet, dass** das Außengefäß (2) doppelwandig gebildet ist mit einer unter Belassung eines Zwischenraums (7) die Innenwände (4) umgebenden Außenwand (6).

10. Backaufsatz (1) nach einem der vorhergehenden Ansprüche, **dadurch gekennzeichnet, dass** der Deckel (23) eine, insbesondere zentrale, Öffnung (25) und eine Abdeckung (26) zum wahlweisen Verschließen der Öffnung (25) aufweist.

11. Backaufsatz (1) nach einem der vorhergehenden Ansprüche, **dadurch gekennzeichnet, dass** der Deckel (23) eine Dampfaustrittsöffnung (27) aufweist.

12. Küchenmaschine (28) mit einer Küchenmaschinenbasis (29), die eine Antriebswelle (32) und einen Motor (35) zum rotierenden Antreiben der Antriebswelle (32) aufweist und die eine Steuerung (38) aufweist zum Ansteuern des Motors (32) und zum Ausgeben eines Heizstroms, wobei die Küchenmaschinenbasis (29) einen Aufnahmeabschnitt (30) aufweist, in dem die Antriebswelle(32) mit einem zweiten Kupplungsabschnitt (33) mündet und in dem elektrische Kontakte (34) zum Beaufschlagen mit dem Heizstrom angeordnet sind, **dadurch gekennzeichnet, dass** die Küchenmaschine (28) einen Backaufsatz (1) nach einem der vorhergehenden Ansprüche aufweist, der mit seinem Verbindungsabschnitt (22) in den Aufnahmeabschnitt (30) derart einsetzbar und dabei lösbar mit der Küchenmaschinenbasis (29) verbindbar ist, dass die elektrischen Kontaktelemente (19) des Backaufsatzes (1) mit den elektrischen Kontakten (34) der Küchenmaschinenbasis (29) elektrisch kontaktieren und dass die Drehwelle (16) mit dem ersten Kupplungsabschnitt (17) über den zweiten Kupplungsabschnitt (33) mit der Antriebswelle (32) drehfest verbunden ist zum Antreiben des Misch- und Knetwerks (15).

13. Küchenmaschine (28) nach Anspruch 12 mit einem Backaufsatz (1) nach Anspruch 7 oder einem oder mehreren der auf Anspruch 7 unmittelbar oder mittelbar rückbezogenen Ansprüche, **dadurch gekennzeichnet, dass** die Küchenmaschinenbasis (29) einen Positionsfühler aufweist, der eine Stellung des Positionsgeberabschnitts (24) in einer das Außengefäß (2) fest verschließenden und verriegelten Position des Deckels (23) erfasst und in Folge dieser Erfassung ein Signal an die Steuerung (38) ausgibt.

14. Küchenmaschine (28) nach einem der Ansprüche 12 oder 13 mit einem Backaufsatz (1) nach Anspruch 9 oder einem oder mehreren der auf Anspruch 9 unmittelbar oder mittelbar rückbezogenen Ansprüche, **gekennzeichnet durch** eine in der Küchenmaschinenbasis (29) angeordneten Leseeinrichtung zum Auslesen des Identifikationsträgers (21), insbesondere einen RFID-Leser, wobei die Leseeinrichtung mit der Steuerung (38) verbunden ist zum Übermitteln von Daten an die Steuerung (38).

15. Küchenmaschine (28, 39, 44), nach einem der Ansprüche 12 bis 14, **dadurch gekennzeichnet, dass** sie weiterhin einen Kochaufsatz (40) aufweist mit einem einen Garraum umschließenden, eine obere Öffnung aufweisenden Kochgefäß (41), einer in dem Kochgefäß (41) angeordneten Heizeinrichtung und einem an dem Kochgefäß (41) insbesondere lösbar angeordneten und in den Garraum hineinragenden Rührwerk, das eine Drehwelle und an der Drehwelle festgelegte Rührmittel, insbesondere Rührklingen, umfasst, sowie einem Deckel (43) zum Verschließen der oberen Öffnung des Kochgefäßes (41), wobei das Kochgefäß (41) einen Verbindungsabschnitt (42) und in dem Verbindungsabschnitt (42) ein freies Ende der Drehwelle mit ersten Kupplungsmitteln und mit der Heizeinrichtung elektrisch verbundene elektrische Kontaktelemente aufweist, wobei der Kochaufsatz (40) mit seinem Verbindungsabschnitt (42) in den Aufnahmeabschnitt (30) derart einsetzbar und dabei lösbar mit der Küchenmaschinenbasis (29) verbindbar ist, dass die elektrischen Kontaktelemente des Kochaufsatzes (40) mit den elektrischen Kontakten (34) der Küchenmaschinenbasis (29) elektrisch kontaktieren und dass die Drehwelle des Rührwerks mit dem ersten Kupplungsabschnitt über den zweiten Kupplungsabschnitt (33) mit der Antriebswelle (32) drehfest verbunden ist zum Antreiben des Rührwerks.

## Claims

1. A baking attachment (1) for a kitchen appliance (28) with
• an outer vessel (2) enclosing a receiving space (3) with inner walls (4) and having an insertion opening (5) at the top,
• a preparation vessel (8) which has a base (9) and side walls (10), has an upper opening (12), has a preparation space (11) and is arranged in the receiving space (3) in such a way that an intermediate space (13) is formed between the base (9) and the side walls (10) of the preparation vessel (8) and the inner walls (4) of the outer vessel (2) enclosing the receiving space (3),
• a heating device (14) arranged in the intermediate space (13),
• a rotary shaft (16) passing through the bottom (9) of the preparation vessel (8) and through a bottom portion of the outer vessel (2), and a mixing and kneading mechanism (15) connected to the rotary shaft (16) and arranged in the preparation chamber (11), and
• a cover (23) to close the insertion opening (5),
wherein the outer vessel (2) has a connecting portion (22) in the region of the base portion for detachable insertion into a receiving portion (30) of a kitchen appliance base (29),
wherein a free end of the rotary shaft (16) is arranged in the connecting portion (22), which has a first coupling portion (17) for rotationally fixed connection to a second coupling portion (33) arranged on a drive shaft (32) of a kitchen appliance base (29), and
wherein electrical contact elements (19) electrically connected to the heating device (14) are also arranged in the connecting section (22) for detachable connection to electrical contacts (34) of a kitchen appliance base (19), **characterised in that** the preparation vessel (11) is designed to be detachably insertable into the receiving space (3).

2. A baking attachment (1) according to one of the preceding claims, **characterised in that** the mixing and kneading tool (18) can be detachably connected to the rotating shaft (16).

3. A baking attachment (1) according to one of the preceding claims, **characterised in that** the preparation vessel (8) inserted into the receiving space (3) lies with its upper opening (12) below the insertion opening (5), so that the lid (23) does not close the upper opening (12) of the preparation vessel (8) when it is arranged in a closure position closing the insertion opening (5).

4. A baking attachment (1) according to one of the preceding claims, **characterised by** connecting structures on the outer vessel (2) and counter-structures on the lid (23), wherein the lid (23) can be locked to the outer vessel (2) by interaction of the connecting structures and counter-structures.

5. A baking attachment (1) according to one of the preceding claims, **characterised in that** the lid (23) is designed to be completely removable from the outer vessel (2).

6. A baking attachment (1) according to one of the preceding claims, **characterised by** a position sensor section (24) provided on the lid (23) for cooperating with a position sensor on the kitchen appliance base (29) for monitoring a fully locked position of the lid (23) closing the receiving space (3).

7. A baking attachment (1) according to one of the preceding claims, **characterised by** a temperature sensor for detecting a temperature of the preparation vessel (8), the air in the intermediate space (13) and/or a baked product located in the preparation space (11), wherein a signal line of the temperature sensor is connected to a signal contact element located in the connecting portion (22).

8. A baking attachment (1) according to one of the preceding claims, **characterised by** an identification carrier (21), in particular an RFID chip, arranged on the baking attachment (1) and set up for transmitting identification information to a kitchen appliance base (29).

9. A baking attachment (1) according to one of the preceding claims, **characterised in that** the outer vessel (2) is double-walled with an outer wall (6) surrounding the inner walls (4) while leaving a gap (7).

10. A baking attachment (1) according to one of the preceding claims, **characterised in that** the lid (23) has an opening (25), in particular a central opening, and a cover (26) for closing the opening (25) as required.

11. A baking attachment (1) according to one of the preceding claims, **characterised in that** the lid (23) has a steam outlet opening (27).

12. A kitchen appliance (28) comprising a kitchen appliance base (29) having a drive shaft (32) and a motor (35) for rotatably driving the drive shaft (32) and having a controller (38) for controlling the motor (32) and outputting a heating current,
wherein the kitchen appliance base (29) has a receiving section (30), into which the drive shaft (32) opens with a second coupling section (33) and in which electrical contacts (34) are arranged for applying the heating current, **characterised in that** the drive shaft (32) has a second coupling section (33),
**in that** the kitchen appliance (28) has a baking attachment (1) according to one of the preceding claims, which can be inserted with its connecting section (22) into the receiving section (30) in such a way that it can be detachably connected to the kitchen appliance base (29), **in that** the electrical contact elements (19) of the baking attachment (1) make electrical contact with the electrical contacts (34) of the kitchen appliance base (29), and **in that** the rotary shaft (16) is connected to the drive shaft (32) by the first coupling section (17) via the second coupling section (33) in a rotationally fixed manner in order to drive the mixing and kneading mechanism (15).

13. A kitchen appliance (28) according to claim 12 with a baking attachment (1) according to claim 7 or one or more of the claims referring directly or indirectly back to claim 7, **characterised in that** the kitchen appliance base (29) has a position sensor which detects a position of the position sensor section (24) in a position of the lid (23) which firmly closes and locks the outer vessel (2) and, as a result of this detection, outputs a signal to the controller (38).

14. A kitchen appliance (28) according to one of claims 12 or 13 with a baking attachment (1) according to claim 9 or one or more of the claims referring directly or indirectly back to claim 9, **characterised by** a reading device arranged in the kitchen appliance base (29) for reading out the identification carrier (21), in particular an RFID reader, wherein the reading device is connected to the controller (38) for transmitting data to the controller (38).

15. A kitchen appliance (28, 39, 44) according to one of claims 12 to 14, **characterised in that** it further comprises a cooking attachment (40) with a cooking vessel (41) enclosing a cooking chamber and having an upper opening, a heating device arranged in the cooking vessel (41) and an agitator arranged on the cooking vessel (41), in particular detachably, and projecting into the cooking chamber, which agitator comprises a rotating shaft and agitating means, in particular agitator blades, fixed to the rotating shaft, as well as a lid (43) for closing the upper opening of the cooking vessel (41), wherein the cooking vessel (41) has a connecting portion (42) and, in the connecting portion (42), a free end of the rotary shaft with first coupling means and electrical contact elements electrically connected to the heating device, wherein the cooking attachment (40) can be inserted with its connecting portion (42) into the receiving portion (30) in such a way and can thereby be detachably connected to the kitchen appliance base (29), **in that** the electrical contact elements of the cooking attachment (40) make electrical contact with the electrical contacts (34) of the kitchen appliance base (29), and **in that** the rotary shaft of the agitator is connected to the drive shaft (32) by the first coupling section via the second coupling section (33) in a rotationally fixed manner in order to drive the agitator.

## Revendications

1. Adaptateur de cuisson (1) pour robot de cuisine (28) avec
• un récipient extérieur (2) renfermant un espace de réception (3) avec des parois intérieures (4) et comportant une ouverture d'insertion (5) au sommet,
• un récipient de préparation (8) comportant une base (9) et des parois latérales (10), une ouverture supérieure (12), un espace de préparation (11) et disposé dans l'espace de réception (3) de manière à former un espace intermédiaire (13) entre la base (9) et les parois latérales (10) du récipient de préparation (8) et les parois intérieures (4) du récipient extérieur (2) entourant l'espace de réception (3),
• un dispositif de chauffage (14) disposé dans l'espace intermédiaire (13),
• un arbre rotatif (16) traversant le fond (9) de la cuve de préparation (8) et une partie inférieure de la cuve extérieure (2), et un mécanisme de mélange et de malaxage (15) relié à l'arbre rotatif (16) et disposé dans la chambre de préparation (11), et
• un couvercle (23) pour fermer l'ouverture d'insertion (5),
dans lequel le récipient extérieur (2) comporte une partie connexion (22) dans la zone de la partie de base pour une insertion détachable dans une partie réception (30) d'une base de robot de cuisine (29),
dans laquelle une extrémité libre de l'arbre rotatif (16) est disposée dans la partie connexion (22), qui comporte une première partie d'accouplement (17) pour une connexion fixe en rotation à une deuxième partie d'accouplement (33) disposée sur un arbre d'entraînement (32) d'une base de robot de cuisine (29), et
dans laquelle des éléments de contact électrique (19) reliés électriquement au dispositif de chauffage (14) sont également disposés dans la section de connexion (22) pour une connexion amovible aux contacts électriques (34) d'une base de machine de cuisine (19), **caractérisée par le fait que** le récipient de préparation (11) est conçu pour être inséré de manière amovible dans l'espace de réception (3).

2. Adaptateur de cuisson (1) selon l'une des revendications précédentes, **caractérisé par le fait que** l'outil de mélange et de pétrissage (18) peut être relié de manière amovible à l'arbre rotatif (16).

3. Adaptateur de cuisson (1) selon l'une des revendications précédentes, **caractérisé en ce que** le récipient de préparation (8) inséré dans l'espace de réception (3) se trouve avec son ouverture supérieure (12) en dessous de l'ouverture d'insertion (5), de sorte que le couvercle (23) ne ferme pas l'ouverture supérieure (12) du récipient de préparation (8) lorsqu'il est disposé dans une position de fermeture fermant l'ouverture d'insertion (5).

4. Adaptateur de cuisson (1) selon l'une des revendications précédentes, **caractérisé par** des structures de connexion sur le récipient extérieur (2) et des contre-structures sur le couvercle (23), dans lequel le couvercle (23) peut être verrouillé sur le récipient extérieur (2) par l'interaction des structures de connexion et des contre-structures.

5. Adaptateur de cuisson (1) selon l'une des revendications précédentes, **caractérisé par le fait que** le couvercle (23) est conçu pour être complètement amovible du récipient extérieur (2).

6. Adaptateur de cuisson (1) selon l'une des revendications précédentes, **caractérisé par** une section de capteur de position (24) prévue sur le couvercle (23) pour coopérer avec un capteur de position sur la base du robot de cuisine (29) pour surveiller une position complètement verrouillée du couvercle (23) fermant l'espace de réception (3).

7. Adaptateur de cuisson (1) selon l'une des revendications précédentes, **caractérisé par** un capteur de température pour détecter une température du récipient de préparation (8), de l'air dans l'espace intermédiaire (13) et/ou d'un produit cuit situé dans l'espace de préparation (11), dans lequel une ligne de signal du capteur de température est connectée à un élément de contact de signal situé dans la partie connexion (22).

8. Adaptateur de cuisson (1) selon l'une des revendications précédentes, **caractérisé par** un support d'identification (21), en particulier une puce RFID, disposé sur l'adaptateur de cuisson (1) et configuré pour transmettre des informations d'identification à une base de machine de cuisine (29).

9. Adaptateur de cuisson (1) selon l'une des revendications précédentes, **caractérisé par le fait que** la cuve extérieure (2) est à double paroi, une paroi extérieure (6) entourant les parois intérieures (4) tout en laissant un espace (7).

10. Adaptateur de cuisson (1) selon l'une des revendications précédentes, **caractérisé en ce que** le couvercle (23) présente une ouverture (25), en particulier une ouverture centrale, et un couvercle (26) pour fermer l'ouverture (25) en cas de besoin.

11. Adaptateur de cuisson (1) selon l'une des revendications précédentes, **caractérisé par le fait que** le couvercle (23) possède une ouverture de sortie de vapeur (27).

12. Robot de cuisine (28) comprenant une base de robot de cuisine (29) avec un arbre d'entraînement (32) et un moteur (35) pour entraîner de manière rotative l'arbre d'entraînement (32) et ayant un dispositif de commande (38) pour commander le moteur (32) et délivrer un courant de chauffage,
dans lequel la base du robot de cuisine (29) comporte une section de réception (30) dans laquelle l'arbre d'entraînement (32) s'ouvre avec une deuxième section d'accouplement (33) et dans laquelle des contacts électriques (34) sont disposés pour appliquer le courant de chauffage, **caractérisé par le fait que** l'arbre d'entraînement (32) comporte une deuxième section d'accouplement (33),
le robot de cuisine (28) comporte un adaptateur de cuisson (1) selon l'une des revendications précédentes, qui peut être inséré avec sa section de raccordement (22) dans la section de réception (30) de manière à pouvoir être relié de manière amovible à la base du robot de cuisine (29), en ce que les éléments de contact électrique (19) de l'adaptateur de cuisson (1) établissent un contact électrique avec les contacts électriques (34) de la base du robot de cuisine (29), et en ce que l'arbre rotatif (16) est relié à l'arbre d'entraînement (32) par la première section d'accouplement (17) via la deuxième section d'accouplement (33) de manière fixe en rotation afin d'entraîner le mécanisme de mélange et de pétrissage (15).

13. Robot de cuisine (28) selon la revendication 12, comportant un adaptateur de cuisson (1) selon la revendication 7 ou une ou plusieurs des revendications renvoyant directement ou indirectement à la revendication 7, **caractérisé en ce que** la base du robot de cuisine (29) a un capteur de position qui détecte une position de la section du capteur de position (24) dans une position du couvercle (23) qui ferme et verrouille fermement le récipient extérieur (2) et, à la suite de cette détection, émet un signal vers le dispositif de commande (38).

14. Robot de cuisine (28) selon l'une des revendications 12 ou 13, comportant un adaptateur de cuisson (1) selon la revendication 9 ou l'une ou plusieurs des revendications renvoyant directement ou indirectement à la revendication 9, **caractérisé par** un dispositif de lecture disposé dans la base du robot de cuisine (29) pour lire le support d'identification (21), en particulier un lecteur RFID, dans lequel le dispositif de lecture est connecté au dispositif de commande (38) pour transmettre des données au dispositif de commande (38).

15. Robot de cuisine (28, 39, 44) selon l'une des revendications 12 à 14, **caractérisé en ce qu'**il comprend en outre un adaptateur de cuisson (40) avec un récipient de cuisson (41) renfermant une chambre de cuisson et présentant une ouverture supérieure, un dispositif de chauffage disposé dans le récipient de cuisson (41) et un agitateur disposé sur le récipient de cuisson (41), en particulier de manière amovible, et faisant saillie dans la chambre de cuisson, lequel agitateur comprend un arbre rotatif et des moyens d'agitation, en particulier des pales d'agitateur, fixés à l'arbre rotatif, ainsi qu'un couvercle (43) pour fermer l'ouverture supérieure du récipient de cuisson (41), dans lequel le récipient de cuisson (41) a une partie connexion (42) et, dans la partie connexion (42), une extrémité libre de l'arbre rotatif (42), une extrémité libre de l'arbre rotatif avec un premier moyen d'accouplement et des éléments de contact électrique reliés électriquement au dispositif de chauffage, dans lequel l'adaptateur de cuisson (40) peut être inséré avec sa partie connexion (42) dans la partie réception (30) de telle manière et peut ainsi être relié de manière amovible à la base du robot de cuisine (29), les éléments de contact électrique de l'adaptateur de cuisson (40) établissent un contact électrique avec les contacts électriques (34) de la base du robot de cuisine (29), et l'arbre rotatif de l'agitateur est relié à l'arbre d'entraînement (32) par la première section d'accouplement via la deuxième section d'accouplement (33) de manière fixe en rotation afin d'entraîner l'agitateur.
